# FASCICULE DE BREVET EUROPEEN

(11) **EP 2 972 049 B1**
(45) Date de publication et mention de la délivrance du brevet: **14.06.2017**
(21) Numéro de dépôt: 14709661.4
(22) Date de dépôt: 12.03.2014
(51) Int. Cl.: F28F 21/06, F02B 29/04, F28F 21/08, F28D 9/00, F28D 21/00

(54) **ECHANGEUR THERMIQUE, EN PARTICULIER REFROIDISSEUR D'AIR DE SURALIMENTATION**
WÄRMETAUSCHER, INSBESONDERE SUPRALADENDER LUFTKÜHLER
HEAT EXCHANGER, IN PARTICULAR A SUPERCHARGING AIR COOLER

(30) Priorité: 12.03.2013 FR 1352205
(43) Date de publication de la demande: 20.01.2016
(73) Titulaire: Valeo Systemes Thermiques, 78320 Le Mesnil Saint Denis (FR)
(72) Inventeur: DEVEDEUX, Sébastien, F-78000 Versailles (FR); GUERRA, Julio, F-91760 Itteville (FR); GROSJEAN, Denis, F-92190 Meudon (FR); FERLAY, Benjamin, F-78720 Cernay La Ville (FR); ODILLARD, Laurent, F-72390 Le Luart (FR); BLANCHARD, Jérôme, F-28700 Bleury (FR); VALLEE, Nicolas, F-51110 Bazancourt (FR); NAUDIN, Yoann, F-08300 Saint Loup En Champagne (FR); ONETTI, Demetrio, F-51370 Saint-Brice Courcelles (FR); DUBOIS, Sylvain, F-92000 Nanterre (FR)
(74) Mandataire: Metz, Gaëlle
(86) Numéro de dépôt international: PCT/EP2014/054874
(87) Numéro de publication internationale: WO 2014/140119

(56) Documents cités:
- EP-A1- 1 983 171
- DE-A1-102004 016 344
- DE-A1-102009 025 282
- US-A1- 2007 251 683

## Description

L'invention se rapporte au domaine des échangeurs thermiques, notamment pour véhicules automobiles. Elle concerne, en effet, un échangeur thermique conforme au préambule de la revendication 1. Un tel échangeur est connu, par exemple, du document EP 1 983 171 A. Elle concerne plus particulièrement un échangeur thermique comportant un faisceau d'échange thermique déterminant de premiers canaux de circulation pour la circulation d'un gaz à refroidir et de seconds canaux de circulation pour la circulation d'un liquide de refroidissement.

Un tel échangeur thermique peut être réalisé notamment sous la forme d'un refroidisseur d'air de suralimentation d'un moteur thermique de véhicule automobile, le gaz à refroidir étant alors constitué par l'air de suralimentation du moteur.

En effet, les moteurs thermiques suralimentés, ou turbo-compressés, en particulier les moteurs diesel, sont alimentés en air comprimé appelé air de suralimentation provenant d'un turbo-compresseur actionné par les gaz d'échappement du moteur.

Toutefois, cette compression a pour effet d'échauffer l'air qui se trouve à une température trop élevée et il est souhaitable, pour un bon fonctionnement du moteur, de de le refroidir afin d'abaisser sa température avant son admission dans les cylindres du moteur.

On utilise pour cela, de manière classique, un échangeur thermique appelé refroidisseur d'air de suralimentation.

Ce refroidisseur a pour fonction de refroidir l'air de suralimentation par échange thermique avec un autre fluide comme de l'air extérieur ou un liquide comme l'eau du circuit de refroidissement du moteur, formant ainsi un échangeur du type air/air ou liquide/air.

De façon connue, un échangeur thermique, et plus précisément un refroidisseur d'air de suralimentation, comprend des éléments d'échange thermique et d'écoulement de fluide dans lesquels circulent des fluides échangeant de la chaleur entre eux.

De nombreuses associations de fluides peuvent être envisagées, qu'il s'agisse de liquides et/ou de gaz.

De nombreuses configurations structurelles sont envisageables.

On connaît des échangeurs comprenant un faisceau d'échange thermique comprenant un empilement de plaques disposées parallèlement les unes aux autres sur une ou plusieurs rangées parallèles entre elles, ces plaques étant agencées pour définir d'une part des premiers canaux de circulation d'un premier fluide et d'autre part des seconds canaux de circulation d'un deuxième fluide en échangeant de la chaleur avec le premier fluide.

Ces plaques peuvent être alternées avec des éléments de perturbation de l'écoulement d'un fluide, par exemple d'un fluide gazeux comme l'air de suralimentation.

Selon une solution connue un échangeur comporte une boîte collectrice d'entrée et une boîte collectrice de sortie pour le fluide gazeux tel que l'air de suralimentation, disposées de part et d'autre du faisceau.

Ces boîtes collectrices permettent l'admission et l'évacuation de l'air de suralimentation à travers l'échangeur.

De plus, dans le cas d'un refroidisseur du type liquide/air, ce dernier peut être implanté dans un endroit choisi du compartiment moteur, en particulier près du moteur. À cet effet, la boîte de sortie peut être assemblée à la culasse du moteur, soit directement, soit par un élément intermédiaire, et assure notamment la fonction d'admission de l'air de suralimentation vers chacun des cylindres du moteur.

Un tel échangeur est sollicité mécaniquement, en particulier au droit des fixations sur la culasse du moteur.

Par ailleurs, dans le cas d'un refroidisseur d'air de suralimentation le collecteur de sortie pour l'admission d'air de suralimentation vers les cylindres du moteur peut permettre de fournir un mélange comprenant l'air refroidi par l'échangeur et une partie des gaz d'échappement issus du moteur, appelés gaz d'échappement recirculés. À cet effet, une vanne permet l'injection d'une partie des gaz d'échappement recirculés, dans volume défini par le collecteur de sortie de gaz, dit d'admission de gaz.

Dans ce cas, le collecteur de sortie d'admission de gaz doit être apte à maintenir les hautes températures des gaz d'échappement issus du moteur.

L'invention a notamment pour but de proposer à moindre coût un échangeur thermique susceptible de s'adapter aux sollicitations mécaniques et aux conditions de températures du côté de l'entrée de gaz et du côté de la sortie de gaz.

L'invention vise encore à procurer un tel échangeur thermique qui convient tout particulièrement comme refroidisseur d'air de suralimentation.

L'invention propose à cet effet un échangeur thermique comportant :
- un faisceau d'échange thermique définissant des premiers canaux de circulation pour la circulation d'un gaz à refroidir et des seconds canaux de circulation pour la circulation d'un liquide de refroidissement, et
- deux collecteurs respectivement d'entrée de gaz et de sortie de gaz assemblés respectivement sur deux faces ouvertes du faisceau d'échange thermique dans lesquelles débouchent les premiers canaux de circulation,
caractérisé en ce qu'un premier collecteur est serti au faisceau d'échange thermique et le deuxième collecteur est brasé ou soudé au faisceau d'échange thermique.

Ainsi, la technologie d'assemblage des deux collecteurs et leur matériau peut être adapté indépendamment en fonction de l'application, des conditions de fonctionnement pour répondre notamment à des sollicitations mécaniques et/ou des conditions de température. En outre, cette adaptation permet de réduire les coûts.

Selon un mode de réalisation préféré, le collecteur d'entrée de gaz est serti au faisceau d'échange thermique et le collecteur de sortie de gaz est soudé ou brasé au faisceau d'échange thermique. Ainsi, le collecteur de sortie de gaz par exemple fixé à la culasse du moteur peut être brasé ou soudé au faisceau d'échange thermique pour répondre aux sollicitations mécaniques indépendamment de la fixation et du matériau du collecteur d'entrée.

Avantageusement, le premier collecteur serti au faisceau d'échange thermique est réalisé dans une matière plastique ou une matière métallique, tel qu'un alliage d'aluminium.

Le deuxième collecteur brasé ou soudé au faisceau d'échange thermique peut être réalisé dans une matière métallique, tel qu'un alliage d'aluminium.

Ainsi, le matériau et la technologie d'assemblage au faisceau d'échange thermique peuvent être adaptés indépendamment pour les deux collecteurs en fonction des conditions de fonctionnement de l'échangeur thermique et au niveau d'une part de l'entrée de gaz et d'autre part de la sortie de gaz.

Les collecteurs peuvent être réalisés par moulage selon la forme choisie.

Les deux collecteurs sont avantageusement assemblés respectivement sur deux faces opposées du faisceau.

Selon un aspect de l'invention, le premier collecteur serti au faisceau d'échange thermique comprend un boîtier de collecteur et une plaque collectrice dans laquelle débouchent les premiers canaux du faisceau d'échange thermique, et le boîtier de collecteur présente une face ouverte délimitée par un rebord périphérique maintenu par sertissage contre la plaque collectrice.

Selon un mode de réalisation, la plaque collectrice présente une forme générale d'un cadre et comporte un bord périphérique de forme générale rectangulaire délimitant une ouverture de passage de gaz et présentant un rebord de sertissage entourant une gorge de réception du rebord périphérique du premier collecteur serti au faisceau d'échange thermique.

Dans une application préférentielle de l'invention, l'échangeur thermique est réalisé sous la forme d'un refroidisseur d'air de suralimentation d'un moteur thermique.de véhicule automobile, les premiers canaux de circulation servant à la circulation de l'air à refroidir.

Le collecteur d'entrée de gaz peut comprendre une tubulure venue de moulage, et le collecteur de sortie de gaz présente une ouverture d'admission d'air de suralimentation pour le moteur thermique du véhicule. Le collecteur de sortie de gaz forme un diffuseur d'admission d'air pour le moteur thermique du véhicule. Dans ce cas, le refroidisseur d'air de suralimentation est lié au diffuseur d'admission d'air du moteur.

Selon un mode de réalisation, le collecteur de sortie de gaz définit un volume collecteur de gaz dans lequel débouchent les premiers canaux de circulation, et comprend un canal d'injection de gaz d'échappement recirculés et une pluralité d'orifices d'injection de gaz d'échappement recirculés pour l'injection de gaz d'échappement recirculés dans le volume collecteur de gaz du collecteur de sortie de gaz.

Le collecteur de sortie de gaz peut comprendre une vanne d'admission des gaz d'échappement recirculés dans le collecteur de sortie de gaz.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en perspective d'un échangeur thermique selon un premier mode de réalisation de l'invention ;
- la figure 2 est une vue en perspective du faisceau de l'échangeur thermique de la figure 1 ;
- la figure 3 est une vue en coupe selon la ligne III-III de la figure 2 ;
- la figure 4 est une vue en coupe selon la ligne IV-IV de la figure 2 ;
- la figure 5 est une vue en coupe selon la ligne V-V de la figure 2 ;
- la figure 6 est une vue en perspective montrant le faisceau de la figure 2 avant assemblage des collecteurs ;
- la figure 7 est une vue en perspective d'un échangeur thermique selon un deuxième mode de réalisation, et
- la figure 8 est une vue en perspective de l'échangeur thermique de la figure 7 dont le collecteur de sortie pour l'alimentation du moteur thermique en gaz d'admission, comporte un dispositif d'injection de gaz d'échappement recirculés dans le collecteur de sortie.

Dans ces figures, les éléments sensiblement identiques portent les mêmes références.

L'invention concerne un échangeur thermique 1, en particulier pour refroidir l'air de suralimentation pour moteur thermique, tel qu'un moteur diesel de véhicule automobile.

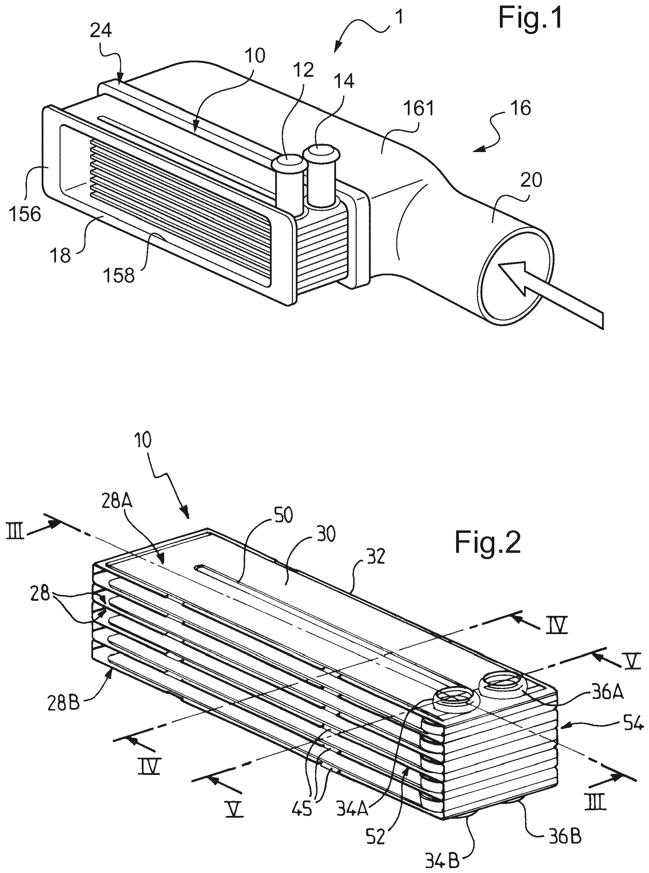

On a représenté sur la figure 1 un premier mode de réalisation de l'échangeur thermique 1.

Un tel échangeur 1 peut être un échangeur dit « air-liquide », c'est-à-dire un échangeur dans lequel les fluides qui échangent de la chaleur sont l'air et un liquide tel que de l'eau. Dans le cas d'un refroidisseur d'air de suralimentation, le liquide est de préférence de l'eau du circuit de refroidissement dit « basse température » dudit moteur; il s'agit typiquement d'eau glycolée.

Bien entendu, l'invention n'est pas limitée aux refroidisseurs d'air de suralimentation de véhicules automobiles et peut s'appliquer à d'autres types d'échangeurs thermiques.

L'échangeur thermique 1 représenté sur la figure 1 comprend un faisceau d'échange thermique 10 d'échange thermique qui, dans l'exemple, est formé par un assemblage de plaques empilées, comme cela sera décrit plus loin. Le faisceau d'échange thermique 10 est muni de deux tubulures 12 et 14 servant respectivement à l'entrée et à la sortie du liquide de refroidissement par exemple.

Le faisceau d'échange thermique 10 est encadré d'une part par un collecteur d'entrée de gaz 16 muni d'une tubulure d'entrée de gaz 20 et d'autre part par un collecteur de sortie de gaz 18.

Les deux collecteurs d'entrée de gaz et de sortie de gaz 16, 18 sont dans l'exemple illustré assemblés respectivement sur deux faces opposées du faisceau d'échange thermique.

Le collecteur de sortie de gaz 18 est aussi appelé diffuseur d'admission d'air pour le moteur thermique du véhicule. Ce collecteur de sortie de gaz 18 peut être fixé directement ou indirectement sur la culasse du moteur. Un tel collecteur de sortie de gaz 18 est également appelé collecteur d'admission de gaz 18.

Les collecteurs 16 et 18 et la tubulure 20 peuvent être réalisés par moulage à la forme voulue et sont assemblés de part et d'autre du faisceau d'échange thermique 10.

Au moins un collecteur, ici le collecteur 16, peut être assemblé au faisceau d'échange thermique 10 par l'intermédiaire d'une plaque collectrice 24.

On se réfère maintenant aux figures 2 à 5 pour décrire la structure du faisceau d'échange thermique 10.

Dans l'exemple illustré, le faisceau d'échange thermique 10 est formé par un assemblage de plaques embouties 28, encore appelées demi-lames, selon une technique connue. Cependant, l'invention s'applique également à d'autres types de faisceaux, et notamment à des faisceaux comportant des tubes et des ailettes.

Comme le montre la figure 2, le faisceau d'échange thermique 10 est formé par un empilement de plaques embouties 28, 28A, 28B disposées par paires, réalisées identiques, à l'exception des deux plaques d'extrémité 28A et 28B opposées ; une des plaques d'extrémité, par exemple la plaque 28A, recevant les tubulures 12 et 14 précitées.

Chacune des plaques embouties 28, 28A, 28B présente selon l'exemple illustré une forme générale sensiblement rectangulaire avec deux grands côtés opposés et deux petits côtés opposés.

Une plaque 28, 28A, 28B comporte par exemple une paroi de fond 30 sensiblement plane limitée par un rebord périphérique 32 de forme générale rectangulaire, qui est surélevé par rapport à la paroi de fond 30 pour former une cuvette peu profonde.

En outre, chacune des plaques 28, 28A, 28B peut comporter deux bossages d'extrémité 34, 34A, 34B et 36, 36A, 36B.

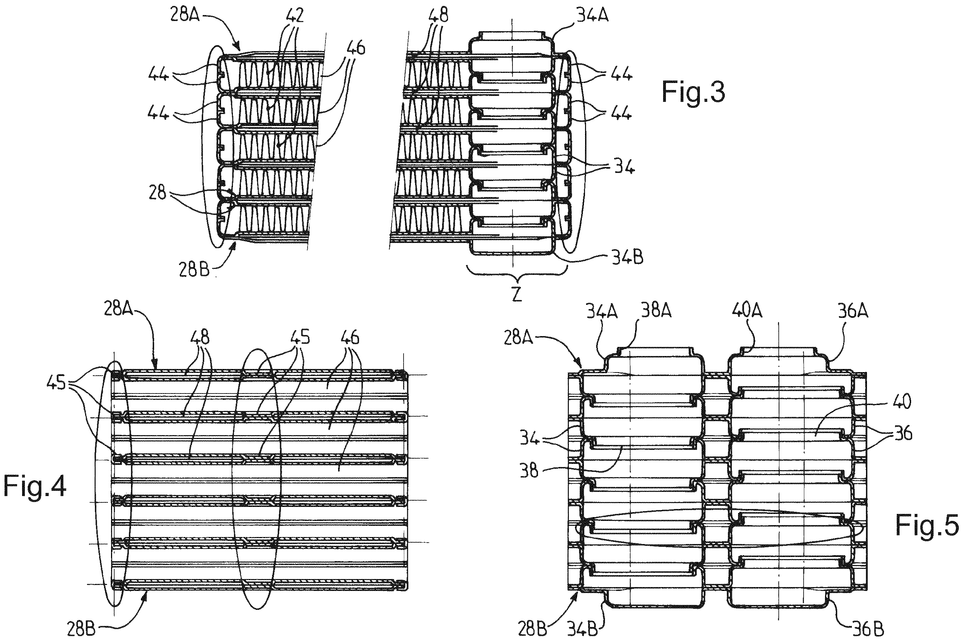

Les bossages 34 et 36 des plaques intermédiaires 28 sont munis d'ouvertures respectives 38 et 40 de forme circulaire (figure 5).

Les bossages 34A et 36A de la plaque d'extrémité 28A sont différents et des bossages 34 et 36 des plaques intermédiaires 28 et ont des ouvertures respectives 38A et 40A adaptées pour la réception des tubulures respectives 14 et 16. De même, l'autre plaque d'extrémité 28B présentent des bossages 34B et 36B différents puisqu'ils comportent à chaque fois une paroi fermée donc dépourvue d'ouverture.

Comme on le voit plus particulièrement sur les figures 3 et 4, les plaques embouties 28, 28A, 28B sont disposées par paires et les bossages respectifs 34, 36 d'une plaque 28 appartenant à une paire sont en communication avec les bossages respectifs 34, 36 d'une plaque voisine 28 appartenant à une paire de plaques voisines. Ceci permet d'établir une communication de fluide entre les chambres que délimitent les paires respectives de plaques.

Dans l'exemple illustré sur la figure 5, les plaques 28, 28A, 28B sont symétriques et leurs bossages respectifs 34, 36, 34A, 36A forment des collets permettant un auto-centrage des plaques 28, 28A, 28B entre elles de manière à garantir un bon assemblage par brasage.

Le faisceau d'échange thermique 10 peut comporter en outre des intercalaires ondulés 42 (figure 3) disposés à chaque fois entre des paires de plaques voisines. Ces intercalaires ondulés 42 ont leurs ondulations respectives brasées sur les parois de fond 30 respectives de deux plaques 28, 28A, 28B en vis-à-vis.

En se référant de nouveau à la figure 2, les rebords périphériques respectifs 32 de deux plaques 28, 28A, 28B appartenant à une même paire sont par exemple brasés sur toute leur périphérie pour définir des canaux ou lames de circulation du liquide de refroidissement, qui communiquent entre eux au travers des bossages respectifs.

Par ailleurs, les petits côtés des plaques 28, 28A, 28B peuvent présenter un bord 44 replié en U, ce qui permet d'assembler les paires de plaques 28 entre elles en délimitant des canaux de circulation pour le gaz à refroidir. Les bords 44 sont entourés par un ovale sur la figure 3.

Ainsi, le faisceau d'échange thermique 10 délimite des premiers canaux 46 pour le gaz à refroidir, dans lesquels peuvent être agencés les intercalaires ondulés 42, et des seconds canaux 48 pour la circulation du liquide de refroidissement (figures 3 et 4).

Du fait que les bords 44 des plaques sont jointifs, on définit ainsi une veine de gaz pour le gaz à refroidir qui traverse simultanément l'ensemble des premiers canaux 46 pour être refroidis par le liquide de refroidissement qui circule dans les seconds canaux 48.

Comme on le voit sur la figure 4, des agrafes 45 peuvent être formées sur le rebord périphérique 32 des plaques 28, 28A, 28B pour permettre un assemblage provisoire des plaques de chaque paire avant leur assemblage définitif par brasage.

Par ailleurs, les plaques 28, 28A, 28B peuvent présenter respectivement sur leur paroi de fond 30 une nervure 50 qui s'étend parallèlement aux grands côtés de la plaque 28, 28A, 28B sur une longueur inférieure à celle d'un grand côté, pour définir un parcours de circulation en U dans chaque second canal 48 (figure 2).

L'ensemble des éléments du faisceau d'échange thermique 10, à savoir les plaques embouties 28, 28A, 28B, les intercalaires ondulés 42, les tubulures d'entrée et de sortie 12, 14 du liquide de refroidissement sont avantageusement réalisés dans un alliage d'aluminium, assemblés entre eux et brasés en une seule opération dans un four de brasage.

En outre, comme on peut le voir sur la figure 2, le faisceau d'échange thermique 10 comporte deux faces ouvertes opposées : une face ouverte 52 du côté de l'entrée des gaz et une face ouverte 54 du côté de la sortie des gaz.

Les premiers canaux 46 débouchent à la fois dans les deux faces 52 et 54 précitées.

Sur les faces ouvertes 52 et 54 sont assemblés respectivement les collecteurs 16 et 18 comme on le voit sur la figure 1.

Ainsi, en référence aux figures 1 et 3, le gaz à refroidir pénètre dans le collecteur d'entrée de gaz 16 au travers de la tubulure 20, traverse ensuite les premiers canaux de circulation 46 du faisceau d'échange thermique 10 pour gagner le collecteur de sortie de gaz 18 et quitter ce dernier pour être admis aux cylindres du moteur (non représenté). Le gaz est refroidi par un liquide de refroidissement qui pénètre dans le faisceau d'échange thermique 10 par la tubulure 12, circule dans les seconds canaux 48 du faisceau d'échange thermique 10 pour échanger de la chaleur avec le gaz à refroidir et quitte ensuite le faisceau par la tubulure 14.

En ce qui concerne les collecteurs d'entrée et de sortie 16, 18, ils sont assemblés au faisceau d'échange thermique 10 selon des technologies différentes.

Plus précisément, un premier collecteur peut être assemblé par sertissage tandis que le deuxième collecteur est assemblé par brasage ou soudage au faisceau d'échange thermique 10.

À titre d'exemple, le collecteur d'entrée de gaz 16 est assemblé au faisceau d'échange thermique 10 par sertissage par l'intermédiaire de la plaque collectrice 24. À cet effet, le collecteur 16 présente un boîtier de collecteur 161 qui est assemblé à la plaque collectrice 24 par sertissage.

Le boîtier 161 du collecteur d'entrée d'air 16 par exemple apte à être serti sur la plaque collectrice 24 peut être réalisé en matière plastique, ou en une autre matière appropriée, par exemple en un alliage métallique tel qu'un alliage d'aluminium.

La plaque collectrice 24 est par exemple brasée au faisceau d'échange thermique 10. À cet effet, la plaque collectrice 24 peut être réalisée dans un alliage d'aluminium, et assemblée avec les éléments du faisceau d'échange thermique 10, et brasée avec le faisceau d'échange thermique 10 en une seule opération dans un four de brasage.

La plaque collectrice 24 peut être réalisée sous la forme d'un cadre de forme générale rectangulaire. Plus précisément, selon l'exemple illustré, la plaque collectrice 24 comporte un bord périphérique 56 de forme générale rectangulaire délimitant une ouverture de passage de gaz 58 en vis-à-vis de la face ouverte 52 du faisceau d'échange thermique 10 du côté de l'entrée de gaz.

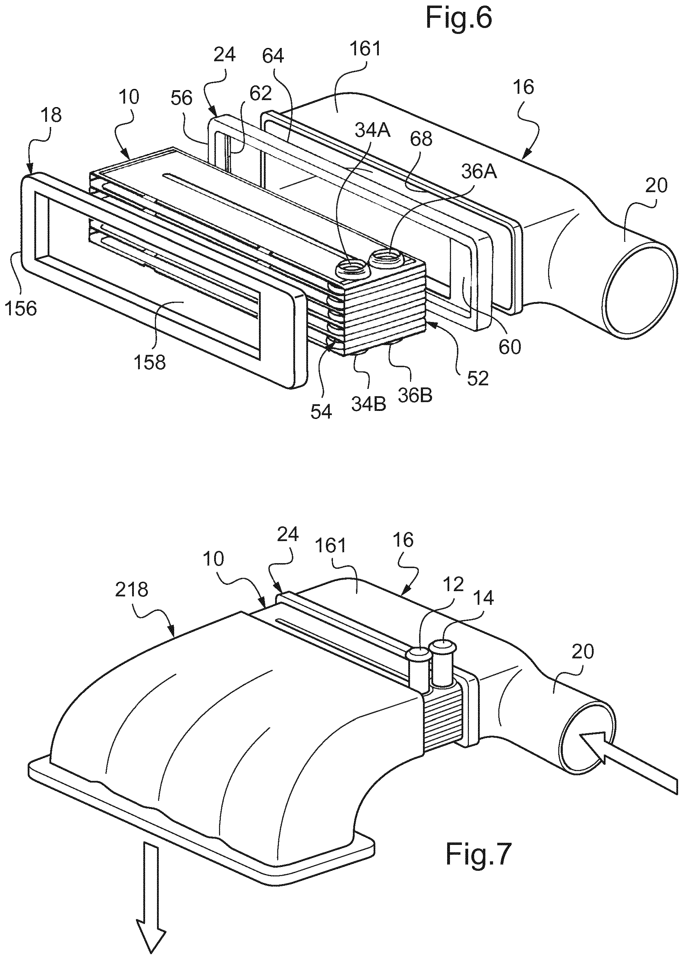

En outre, la plaque collectrice 24 peut comporter une partie masquée 60 (cf figure 6) pour empêcher le passage du gaz dans une région d'extrémité du faisceau d'échange thermique 10 qui est dépourvue de premiers canaux 46. Cette région d'extrémité correspond à la partie du faisceau d'échange thermique 10 qui est dépourvue d'intercalaires ondulés 42 et qui comporte des bossages 34, 36, 34A, 36A, 34B, 36B. Ainsi, le gaz à refroidir est canalisé dans la partie utile du faisceau d'échange thermique 10, c'est à dire celle qui correspond aux premiers canaux 46 et qui comporte par exemple des intercalaires ondulés 42.

Le bord périphérique 56 de la plaque collectrice 24 présente par exemple, du côté tourné vers le faisceau d'échange thermique 10, un rebord en épaulement 62 pour la réception de la face ouverte 52 du faisceau d'échange thermique 10.

Le rebord en épaulement 62 est conformé pour permettre un emboîtement de la plaque collectrice 24 avec le faisceau d'échange thermique 10 avec compression, ce qui permet de se passer d'un outil de maintien pour le brasage.

Comme dit précédemment, le collecteur d'entrée 16 peut être assemblé par sertissage au faisceau d'échange thermique.

Pour ce faire, le bord périphérique 56 de la plaque collectrice 24 du côté opposé non tourné vers le faisceau d'échange thermique 10, peut comprendre un rebord de sertissage 64 entourant une gorge (non visible sur les figures) pour la réception d'un rebord périphérique 68 du boîtier 161 du collecteur 16. Le rebord périphérique 68 du boîtier 161 collecteur 16 peut ainsi être reçu dans la gorge de la plaque collectrice 24 et être serti par le rebord de sertissage 64. Ce rebord de sertissage 64 peut être constitué de manière conventionnelle par un rebord crénelé à languettes repliables, par un rebord à ondulations. D'autres variantes de réalisation du rebord de sertissage peuvent être envisagées.

En se référant de nouveau à la figure 1, le collecteur de sortie de gaz 18 peut selon un premier mode de réalisation être réalisé sous la forme d'une bride ou cadre de forme générale sensiblement rectangulaire.

Le collecteur de sortie de gaz 18 est par exemple brasé au faisceau d'échange thermique 10. À cet effet, le collecteur de sortie de gaz 18 peut être réalisé dans un alliage d'aluminium, et assemblé avec les éléments du faisceau d'échange thermique 10, et brasé avec le faisceau d'échange thermique 10 en une seule opération dans un four de brasage.

Le collecteur de sortie de gaz 18 peut aussi être soudé au faisceau d'échange thermique 10. Dans ce cas, le collecteur de sortie de gaz 18 peut également être réalisé dans un alliage d'aluminium.

De plus, selon l'exemple illustré, le collecteur de sortie de gaz 18 peut comporter de façon similaire à la plaque collectrice 24 un bord périphérique 156 de forme générale rectangulaire délimitant une ouverture de passage de gaz 158 en vis-à-vis de la face ouverte 54 du faisceau d'échange thermique 10 du côté de la sortie de gaz. Cette ouverture 158 forme une ouverture d'admission d'air de suralimentation aux cylindres du moteur (non représenté).

En outre, le collecteur de sortie de gaz 18 peut aussi comporter une partie masquée 60 pour empêcher le passage du gaz dans une région d'extrémité du faisceau d'échange thermique 10 qui est dépourvue de premiers canaux 46. Comme précédemment, cette région d'extrémité correspond à la partie du faisceau d'échange thermique 10 qui est dépourvue d'intercalaires ondulés 42 et qui comporte des bossages 34, 36, 34A, 36A, 34B, 36B, de sorte que le gaz à refroidir est canalisé dans la partie utile du faisceau d'échange thermique 10, correspondant aux premiers canaux 46 et qui comporte par exemple des intercalaires ondulés 42.

L'ensemble des éléments du faisceau d'échange thermique 10, à savoir les plaques 28, 28A, 28B, les intercalaires ondulés 42, et les tubulures d'entrée et de sortie du liquide de refroidissement 12 et 14, ainsi que la plaque collectrice 24 et le collecteur de sortie de gaz, peuvent donc être assemblés entre eux et brasés en une seule opération dans un four de brasage. Le faisceau ainsi obtenu est ensuite assemblé par sertissage au boîtier 161 du collecteur d'entrée de gaz 16.

On peut aussi prévoir que le bord périphérique 156 du collecteur de sortie de gaz 18 présente du côté tourné vers le faisceau d'échange thermique 10, un moyen de maintien temporaire sur le faisceau d'échange thermique 10 avant l'opération de brasage. Il peut s'agir par exemple d'un épaulement conformé pour permettre un emboîtement du collecteur de sortie de gaz 18 avec le faisceau d'échange thermique 10.

Selon un deuxième mode de réalisation illustré sur la figure 7, le collecteur de sortie de gaz 218 définit un volume collecteur de gaz, ici l'air de suralimentation.

L'entrée et la sortie de gaz sont schématisé par des flèches sur la figure 7.

On peut prévoir en outre une vanne 270 permettant l'introduction d'une partie des gaz d'échappement issus du moteur, appelés gaz d'échappement recirculés, dans le collecteur d'admission de gaz 218.

La vanne 270 peut être fixée sur le collecteur de sortie de gaz 218.

La vanne 270 est dite vanne EGR (Exhaust Gas Recirculation). Dans ce cas, le fluide refroidi est mélangé aux gaz d'échappement recirculés dans le collecteur d'admission de gaz 218, et le mélange ainsi obtenu est admis dans les cylindres du moteur.

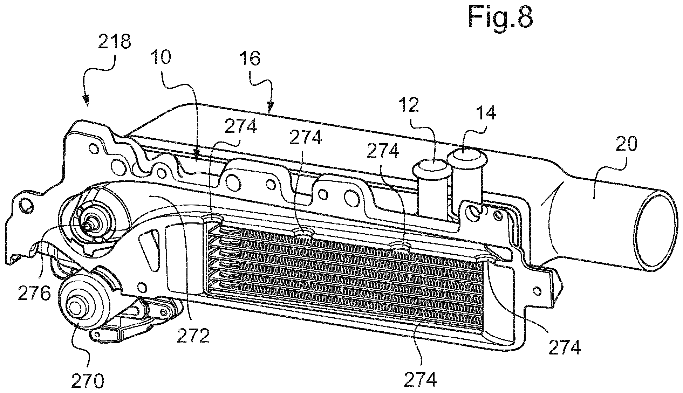

À cet effet, le collecteur de sortie de gaz 218 comprend un dispositif d'injection de gaz recirculés comprenant par exemple un canal d'injection 272 comprenant une pluralité d'orifices d'injection, ou injecteurs 274 par exemple agencés linéairement, et un orifice d'entrée 276 (cf figure 8).

La vanne EGR 270 permet donc un passage des gaz d'échappement recirculés par l'orifice d'entrée 276 dans le canal d'injection 272, et les gaz d'échappement recirculés provenant de la vanne EGR 270 sont injectés dans le volume défini par le collecteur de sortie 218 via les orifices d'injection 274.

La différence de technologie d'assemblage entre le collecteur d'entrée 16 et le collecteur de sortie 218 permet notamment une réduction de coût. En effet, le collecteur d'entrée 16 peut être réalisé en plastique et serti au faisceau d'échange thermique tandis que le collecteur d'admission 218 dans lequel l'air de suralimentation est mélangé aux gaz d'échappement recirculés est réalisé en fonderie pour être soudée ou brasée au faisceau d'échange thermique 10 et peut ainsi résister aux hautes températures.

On a décrit ci-dessus un collecteur d'entrée 16 assemblé par sertissage au faisceau d'échange thermique 10 et un collecteur de sortie 18, 218 assemblé par brasage ou soudage au faisceau d'échange thermique 10.

Bien entendu, on peut prévoir en variante que ce soit le collecteur d'entrée 16 qui soit brasé ou soudé au faisceau d'échange thermique 10 et le collecteur de sortie 18, 218 qui soit serti sur le faisceau d'échange thermique 10.

## Revendications

1. Échangeur thermique comportant :
- un faisceau d'échange thermique (10) définissant des premiers canaux de circulation (46) pour la circulation d'un gaz à refroidir et des seconds canaux de circulation (48) pour la circulation d'un liquide de refroidissement, et
- deux collecteurs respectivement d'entrée de gaz et de sortie de gaz (16, 18, 218) assemblés respectivement sur deux faces (52, 54) ouvertes du faisceau d'échange thermique (10) dans lesquelles débouchent les premiers canaux de circulation (46),
**caractérisé en ce qu'**un premier collecteur (16) est serti au faisceau d'échange thermique (10) et le deuxième collecteur (18 ; 218) est brasé ou soudé au faisceau d'échange thermique (10), le collecteur d'entrée de gaz étant serti au faisceau d'échange thermique (10) et le collecteur de sortie de gaz (18, 218) étant soudé ou brasé au faisceau d'échange thermique (10).

2. Échangeur thermique selon l'une des revendications précédentes, dans lequel le premier collecteur (16) serti au faisceau d'échange thermique (10) est réalisé par moulage d'une matière plastique ou d'une matière métallique, tel qu'un alliage d'aluminium.

3. Échangeur thermique selon l'une quelconque des revendications précédentes, dans lequel le deuxième collecteur (18, 218) brasé ou soudé au faisceau d'échange thermique (10) est réalisé dans une matière métallique, tel qu'un alliage d'aluminium.

4. Échangeur thermique selon l'une quelconque des revendications précédentes, dans lequel les deux collecteurs d'entrée de gaz et de sortie de gaz (16, 18 ; 218) sont assemblés respectivement sur deux faces opposées (52, 54) du faisceau d'échange thermique (10).

5. Échangeur thermique selon l'une des revendications précédentes, dans lequel le premier collecteur (16) serti au faisceau d'échange thermique (10) comprend un boîtier de collecteur (161) et une plaque collectrice (24) dans laquelle débouchent les premiers canaux (46) du faisceau d'échange thermique (10), et le boîtier de collecteur (161) présente une face ouverte délimitée par un rebord périphérique (68) maintenu par sertissage contre la plaque collectrice (24).

6. Échangeur thermique selon la revendication précédente, dans lequel la plaque collectrice (24) présente une forme générale d'un cadre et comporte un bord périphérique (56) de forme générale rectangulaire délimitant une ouverture (58) de passage de gaz et présentant un rebord de sertissage (64) entourant une gorge (66) de réception du rebord périphérique (68) du premier collecteur (16) serti au faisceau d'échange thermique.

7. Échangeur thermique selon l'une des revendications précédentes, **caractérisé en ce qu'**il est réalisé sous la forme d'un refroidisseur d'air de suralimentation d'un moteur thermique de véhicule automobile, les premiers canaux de circulation (46) servant à la circulation de l'air de suralimentation à refroidir.

8. Échangeur thermique selon la revendication précédente, dans lequel le collecteur d'entrée de gaz (16) comprend une tubulure (20) venue de moulage, et le collecteur de sortie de gaz (18, 218) présente une ouverture (158) d'admission d'air de suralimentation pour le moteur thermique du véhicule.

9. Échangeur thermique selon la revendication précédente, dans lequel le collecteur de sortie de gaz (218) définit un volume collecteur de gaz dans lequel débouchent les premiers canaux de circulation (46), et comprend un canal d'injection, (272) de gaz d'échappement recirculés et une pluralité d'orifices d'injection (274) de gaz d'échappement recirculés pour l'injection de gaz d'échappement recirculés dans le volume collecteur de gaz du collecteur de sortie de gaz (218).

10. Échangeur thermique selon la revendication précédente, dans lequel le collecteur de sortie de gaz (218) comprend une vanne d'admission (270) des gaz d'échappement recirculés dans le collecteur de sortie de gaz (218).

## Patentansprüche

1. Wärmetauscher, aufweisend:
- ein Wärmeaustauschbündel (10), das erste Zirkulationskanäle (46) für die Zirkulation eines Kühlgases und zweite Zirkulationskanäle (48) für die Zirkulation einer Kühlflüssigkeit definiert, und
- zwei Verteiler jeweils des Gaseintritts und des Gasaustritts (16, 18, 218), die jeweils an zwei offene Seiten (52, 54) des Wärmeaustauschbündels (10) angefügt sind, in denen die ersten Zirkulationskanäle (46) münden, **dadurch gekennzeichnet, dass** ein erster Verteiler (16) auf das Wärmeaustauschbündel (10) gecrimpt wird und der zweite Verteiler (18; 218) an dem Wärmeaustauschbündel (10) verlötet oder verschweißt wird, wobei der Verteiler des Gaseintritts auf das Wärmeaustauschbündel (10) gecrimpt wird und der Verteiler des Gasaustritts (18, 218) an dem Wärmeaustauschbündel (10) verlötet oder verschweißt wird.

2. Wärmetauscher nach einem der vorangehenden Ansprüche, bei dem der auf das Wärmeaustauschbündel (10) gecrimpte erste Verteiler (16) durch Formen eines Kunststoffs oder eines Metallmaterials, wie einer Aluminiumlegierung, gebildet wird.

3. Wärmetauscher nach einem der vorangehenden Ansprüche, bei dem der an dem Wärmeaustauschbündel (10) verlötete oder verschweißte zweite Verteiler (18, 218) aus einem Metallmaterial, wie einer Aluminiumlegierung, besteht.

4. Wärmetauscher nach einem der vorangehenden Ansprüche, bei dem die zwei Verteiler des Gaseintritts und des Gasaustritts (16, 18; 218) jeweils an zwei einander gegenüberliegenden Seiten (52, 54) des Wärmeaustauschbündels (10) angefügt sind.

5. Wärmetauscher nach einem der vorangehenden Ansprüche, bei dem der auf das Wärmeaustauschbündel (10) gecrimpte erste Verteiler (16) ein Verteilergehäuse (161) und eine Sammelplatte (24) umfasst, in die die ersten Kanäle (46) des Wärmeaustauschbündels (10) münden, wobei das Verteilergehäuse (161) eine offene Seite aufweist, die durch einen Umfangs-Flansch (68) begrenzt wird, der durch Crimpen an die Sammelplatte (24) gehalten wird.

6. Wärmetauscher nach dem vorangehenden Anspruch, bei dem die Sammelplatte (24) im Allgemeinen die Form eines Rahmens besitzt und einen im Allgemeinen rechteckigen Umfangsrand (56) aufweist, der eine Gasdurchtrittsöffnung (58) begrenzt und einen Crimp-Flansch (64) aufweist, der eine Nut (66) für die Aufnahme des Umfangs-Flanschs (68) des auf das Wärmeaustauschbündel gecrimpten ersten Verteilers (16) umgibt.

7. Wärmetauscher nach einem der vorangehenden Ansprüche, **dadurch gekennzeichnet, dass** er in Form eines supraladenden Luftkühlers eines Verbrennungsmotors eines Kraftfahrzeugs ausgeführt ist, wobei die ersten Zirkulationskanäle (46) der Zirkulation der zu kühlenden Ladeluft dienen.

8. Wärmetauscher nach dem vorangehenden Anspruch, bei dem der Verteiler des Gaseintritts (16) einen durch Formen hergestellten Schlauch (20) umfasst und der Verteiler des Gasaustritts (18, 218) eine Öffnung (158) für das Einlassen von Ladeluft für den Verbrennungsmotor des Fahrzeugs aufweist.

9. Wärmetauscher nach dem vorangehenden Anspruch, bei dem der Verteiler des Gasaustritts (218) ein Gasverteilervolumen definiert, in das die ersten Zirkulationskanäle (46) münden, und einen Einspritzkanal (272) für rückgeführtes Abgas sowie eine Vielzahl von Einspritzöffnungen (274) für rückgeführtes Abgas aufweist, um das rückgeführte Abgas in das Gasverteilervolumen des Verteilers des Gasaustritts (218) einzuspritzen.

10. Wärmetauscher nach dem vorangehenden Anspruch, bei dem der Verteiler des Gasaustritts (218) ein Einlassventil (270) für rückgeführtes Abgas in den Verteiler des Gasaustritts (218) umfasst.

## Claims

1. Heat exchanger comprising:
- a heat exchange assembly (10) which defines first circulation channels (46) for the circulation of a gas to be cooled and second circulation channels (48) for the circulation of a cooling liquid, and
- two gas intake and gas outlet collectors (16, 18, 218), respectively, which are assembled on two open faces (52, 54) of the heat exchange assembly (10), respectively, in which the first circulation channels (46) open,
**characterized in that** a first collector (16) is crimped to the heat exchange assembly (10) and the second collector (18; 218) is soldered or welded to the heat exchange assembly (10), the gas intake collector being crimped to the heat exchange assembly (10) and the gas outlet collector (18, 218) being welded or soldered to the heat exchange assembly (10).

2. Heat exchanger according to either of the preceding claims, wherein the first collector (16) which is crimped to the heat exchange assembly (10) is produced by means of molding a plastics material or a metal material, such as an aluminum alloy.

3. Heat exchanger according to either of the preceding claims, wherein the second collector (18, 218) which is soldered or welded to the heat exchange assembly (10) is produced from a metal material, such as an aluminum alloy.

4. Heat exchanger according to one of the preceding claims, wherein the two gas intake and gas outlet collectors (16, 18; 218) are assembled on two opposing faces (52, 54) of the heat exchange assembly (10), respectively.

5. Heat exchanger according to one of the preceding claims, wherein the first collector (16) which is crimped to the heat exchange assembly (10) comprises a collector casing (161) and a collection plate (24) in which the first channels (46) of the heat exchange assembly (10) open, and the collector casing (161) has an open face which is delimited by a peripheral rim (68) which is held by means of crimping against the collection plate (24).

6. Heat exchanger according to the preceding claim, wherein the collection plate (24) is generally in the form of a frame and comprises a generally rectangular peripheral edge (56) which delimits a gas passage opening (58) and which has a crimping rim (64) which surrounds a recess (66) for receiving the peripheral rim (68) of the first collector (16) which is crimped to the heat exchange assembly.

7. Heat exchanger according to one of the preceding claims, **characterized in that** it is produced in the form of a supercharging air cooler of a thermal engine of a motor vehicle, the first circulation channels (46) serving to circulate the supercharging air to be cooled.

8. Heat exchanger according to the preceding claim, wherein the gas intake collector (16) comprises a tube (20) which is integrally molded, and the gas outlet collector (18, 218) has a supercharging air intake opening (158) for the thermal engine of the vehicle.

9. Heat exchanger according to the preceding claim, wherein the gas outlet collector (218) defines a gas collection space in which the first circulation channels (46) open, and comprises an injection channel (272) for recirculated exhaust gases and a plurality of injection holes (274) for recirculated exhaust gases for the injection of recirculated exhaust gases into the gas collection space of the gas outlet collector (218).

10. Heat exchanger according to the preceding claim, wherein the gas outlet collector (218) comprises an intake valve (270) for the recirculated exhaust gases into the gas outlet collector (218).
